# FASCICULE DE BREVET EUROPEEN

(11) **EP 3 429 791 B1**
(45) Date de publication et mention de la délivrance du brevet: **26.08.2020**
(21) Numéro de dépôt: 17714866.5
(22) Date de dépôt: 15.03.2017
(51) Int. Cl.: B23D 57/00, B23D 61/18

(54) **PROCEDE DE DECOUPE D'UN MATELAS, D'UN PANNEAU OU D'UNE PLAQUE EN LAINE MINERALE OU MATERIAU DE CONSTRUCTION POREUX**
VERFAHREN ZUM SCHNEIDEN EINER MATRATZE, EINES PANEELS ODER EINER PLATTE AUS MINERALWOLLE ODER EINEM PORÖSEN BAUMATERIAL
METHOD FOR CUTTING A MATTRESS, A PANEL, OR A SLAB OF MINERAL WOOL OR A POROUS CONSTRUCTION MATERIAL

(30) Priorité: 15.03.2016 FR 1652198; 15.03.2016 FR 1652199
(43) Date de publication de la demande: 23.01.2019
(73) Titulaire: SAINT-GOBAIN PLACO, 92400 Courbevoie (FR)
(72) Inventeur: DOUCHE, Jean-Pierre, 60150 Le Plessis Brion (FR)
(74) Mandataire: Saint-Gobain Recherche
(86) Numéro de dépôt international: PCT/FR2017/050593
(87) Numéro de publication internationale: WO 2017/158292

(56) Documents cités:
- EP-A1- 0 738 569
- WO-A1-2012/042299
- FR-A1- 2 640 906

## Description

L'invention concerne un procédé de découpe d'un matelas ou d'un panneau en laine minérale. Elle s'applique tout particulièrement aux produits d'isolation acoustique à base de laine minérale.

Le document WO 2012/042299 A divulgue un procédé de découpe d'un panneau de fibres orientées pour le découper en lamelles, le procédé consistant à couper le panneau en plusieurs lamelles simultanément par une série de lames rectilinéaires disposées à égale distance les unes des autres.

Les matelas ou panneaux en laine minérale sont constitués de fibres minérales fabriquées par fibrage par centrifugation interne ou externe à partir de matière minérale fondue. Du liant est pulvérisé sur les fibres minérales avant qu'elles n'atterrissent sur un tapis de réception. Les matelas ou panneaux sont obtenus après passage en étuve pour faire polymériser le liant. Il existe aussi des produits sans liant consolidés par un procédé mécanique dit d'aiguilletage. Les matelas ou panneaux peuvent être en laine de verre, en laine de roche ou encore en laine de laitier.

Les matelas ou panneaux en laine minérale obtenus après fibrage par centrifugation nécessitent parfois d'être découpés dans leur longueur ou leur largeur afin de diminuer leur taille, dans leur épaisseur afin de réaliser un matelas plus fin et/ou sur leurs bords afin de former des feuillures ou tout autre forme de détail de bord. Il est connu de réaliser ces différentes découpes avec une scie à ruban, une scie circulaire et/ou une toupie de découpe. Toutefois, ces dispositifs de découpe réalisent des découpes de qualité sommaire qui peuvent nécessiter une opération de reprise après découpe, par exemple masquage par peinture, ou ponçage. Ces dispositifs de découpe ont également comme inconvénient de générer beaucoup de poussière, ce qui est potentiellement dangereux pour les opérateurs. Enfin, les dispositifs de découpe à scie ont généralement des dents de scie décalées dans l'épaisseur de part et d'autre de la lame de scie, ce qui peut générer une coupe plus large que nécessaire, source de déchets importants, et gâcher de la matière.

Ce problème se pose plus particulièrement lorsque le produit en laine minérale se compose de laine de roche, a fortiori de densité relativement élevée (typiquement supérieure à 25 kg/m³ en raison de la proportion importante de grains dits « infibrés » qui occasionnent au passage de la lame de scie un arrachage de matière : non seulement le grain de matière minérale, mais aussi un paquet de fibres qui sont attachées à ce grain par l'intermédiaire du liant polymérisé.

L'invention concerne un procédé de découpe d'une plaque ou d'un panneau de matériau de construction poreux, selon la revendication 1. Cette plaque ou ce panneau peut être en tous matériaux de construction poreux, par exemple à base de fibres comme de la laine minérale ou de la laine de matériaux biosourcés ou une laine comprenant différents types de fibres. Le panneau peut également être un panneau pressé de fibres minérales ou encore un panneau à base de matériaux biosourcés, comme le bois ou d'autres fibres naturelles, ou à base de fibres polymères, ou à base d'un mélange de différents types de fibres, etc.

Ces matériaux de construction poreux peuvent être produits par des procédés en ligne où l'on prépare un mélange par voie sèche ou liquide, notamment en suspension aérienne de fibres, ce mélange renfermant un agent liant, et le mélange est déposé ou réparti sur un organe convoyeur et soumis aux opérations de prise ou durcissement de l'agent liant. Finalement un matériau solide est obtenu qui est découpé aux dimensions désirées pour façonner un produit final, le cas échéant avant des étapes de transformation ultérieures. Une première découpe est effectuée en ligne pour séparer des éléments individuels, et une ou plusieurs opérations de découpe peuvent être réalisées en reprise dans des ateliers de façonnage.

Il existe, dans les procédés en ligne, des dispositifs de découpe tels que des scies à guillotine, des scies à ruban, des scies circulaires, ou encore des fraises ou des toupies de découpe. Toutefois, ces dispositifs de découpe ont également comme inconvénient de générer beaucoup de poussière, ce qui est potentiellement dangereux pour les opérateurs. De plus, ces dispositifs de découpes ont généralement des dents de scie décalées dans l'épaisseur, ce qui peut générer des déchets importants et gâcher de la matière.

Il existe aussi des dispositifs à jets d'eau à haute pression, qui peuvent certes limiter les poussières mais ont l'inconvénient d'apporter une quantité d'eau importante sur les surfaces de découpe, qui peut être absorbée par le matériau poreux et pénaliser les propriétés y compris mécaniques du matériau au détriment de la qualité de la construction finale.

Il y a donc un besoin pour un dispositif de découpe de matelas ou panneau en laine minérale, qui permette de réaliser une découpe nette sans ponçage ultérieur, et qui limite fortement les déchets et la poussière générés, ou encore pour un dispositif de découpe de plaque ou panneau, qui permette de réaliser une découpe de matériau de construction poreux qui limite fortement les déchets et la poussière générés.

Selon une autre particularité, le procédé de découpe comprend en outre une étape de découpe d'une feuillure dans le bord avant du matelas, du panneau ou de la plaque de départ, d'une feuillure dans le bord arrière des deux premiers (premières) matelas, panneaux ou plaques, d'une feuillure dans le bord avant des deux deuxièmes matelas, panneaux ou plaques et ainsi de suite de façon à former des feuillures dans le bord arrière et avant des deux respectivement deuxièmes et troisièmes matelas, panneaux ou plaques, des deux troisièmes et quatrièmes matelas, panneaux ou plaques, etc..., par déplacement du fil selon la direction et du matelas, du panneau ou de la plaque selon la direction, de façon à réaliser une découpe selon deux directions perpendiculaires l'une à l'autre, ces deux déplacement pouvant être simultanés.

Selon une autre particularité, le procédé de découpe comprend en outre une étape de rotation de 90° de chaque premier (première), deuxième, etc... matelas, panneau ou plaque puis une étape de découpe transversale de chaque premier (première), deuxième, etc... matelas, panneau ou plaque dans le sens de la longueur initiale pour découper des feuillures sur les deux bords restants.

Selon une autre particularité, la découpe est réalisée par un fil ayant un diamètre compris entre 400 µm et 700 µm, voire entre 300 µm et 700 µm, voire entre 300 µm et moins de 1 mm, voire entre 300 µm et 2 mm.

Selon une autre particularité, le fil est diamanté et comporte des particules abrasives, notamment d'oxyde de zirconium, a sa surface, de taille préférentiellement comprise entre 30 et 80 µm.

Selon une autre particularité, le fil défile à une vitesse linéaire comprise entre 10 m/s et 20 m/s.

Selon une autre particularité, la tension du fil est réglée à une valeur comprise entre 150 N et 500 N.

Selon une autre particularité, le matelas, le panneau ou la plaque se déplace à une vitesse comprise entre 500 mm/s et 2 m/s pour une découpe dans l'épaisseur et entre 10 mm/s et 250 mm/s pour une découpe sur les bords.

Selon une autre particularité, le procédé de découpe comprend en outre une étape de préhension du matelas, du panneau ou de la plaque par des moyens de préhension, les moyens de préhensions comprenant un système de préhension sous vide adapté à se déplacer simultanément et dans la même direction que les moyens de déplacement du matelas, du panneau ou de la plaque.

D'autres caractéristiques et avantages de l'invention vont à présent être décrits en regard des dessins sur lesquels :
- La figure 1 représente une vue de face d'un dispositif de découpe ;
- La figure 2 représente une vue de côté en détail du dispositif de découpe ;
- La figure 3 représente une vue en coupe d'un exemple de découpe dans un matelas, un panneau ou une plaque, réalisée avec le dispositif ;
- La figure 4 représente différents types de bords de matelas, panneau ou plaque.

Les numéros de référence qui sont identiques sur les différentes figures représentent des éléments similaires ou identiques.

Un dispositif de découpe d'un matelas ou panneau en laine minérale, comprenant des moyens de déplacement du matelas ou panneau en laine minérale, qui comprennent au moins un convoyeur, aptes à se déplacer suivant une direction X, un fil diamanté adapté à découper le matelas ou panneau en laine minérale, et des moyens de défilement du fil diamanté dans une direction Y perpendiculaire à la direction X de déplacement du matelas ou panneau en laine minérale.

Le fil permet de limiter au maximum les pertes de matière et les déchets générés car le fil est beaucoup plus fin que les scies des dispositifs de découpe connus. De plus, la découpe par fil ne génère quasiment pas de poussière, ce qui permet d'améliorer les conditions de travail des opérateurs.

Le fil diamanté permet en outre une découpe d'excellente qualité, avec un état de surface net, sans avoir à réaliser de ponçage ultérieur ; cela permet de limiter au maximum les pertes de matière et les déchets générés car le fil diamanté est beaucoup plus fin que les scies des dispositifs de découpe connus. De plus, la découpe par fil diamanté ne génère quasiment pas de poussière, ce qui permet d'améliorer les conditions de travail des opérateurs.

De manière surprenante, l'utilisation d'un fil de découpe dans les conditions de l'invention permet une coupe extrêmement propre. En particulier dans le cas d'un produit en laine de roche renfermant des grains de matière infibrée, il a été observé que les résidus particulaires de découpe sont considérablement réduits en nombre et en masse, et qu'ils contiennent beaucoup moins de grains qu'avec une découpe classique, les grains restant majoritairement inclus dans le produit minéral. On fait ici l'hypothèse que le fil de découpe se crée un chemin entre les fibres, respectivement entre les fibres et les grains, et effectue une libération des fibres par écartement de l'enchevêtrement fibreux, plutôt qu'une cassure des fibres. Ceci peut être obtenu grâce au choix d'un fil suffisamment fin par rapport aux défauts du produit fibreux, typiquement de diamètre inférieur à la taille des particules infibrées qui peuvent faire de 1 à plusieurs millimètres de diamètre.

De plus, l'usage d'un fil diamanté n'était pas proposé dans l'état de la technique. Au contraire, le fil diamanté était jusqu'à présent destiné à la découpe de matériaux durs et cassants, requérant un système de refroidissement par jet d'eau. L'application par les inventeurs à la découpe de matériaux fibreux, à sec, sans jet d'eau de refroidissement, a donné lieu à un nouvel usage, donnant accès à des produits fibreux de qualité largement supérieure aux attentes.

On désigne par « fil diamanté » un fil de découpe généralement métallique porteur à sa surface de particules abrasives, telles que du diamant naturel ou synthétique, avantageusement à base d'oxyde de zirconium ou de nitrure de bore. Les particules sont retenues à la surface de l'âme du fil par brasure ou par l'intermédiaire d'un dépôt continu ou plaquage métallique.

On entend par « matelas ou panneau », soit une bande continue, qui correspond généralement à un matelas en sortie d'étuve, soit un matelas ou panneau, de forme sensiblement parallélépipédique, qui résulte généralement de la découpe en ligne après étuve, et qui peut même avoir été redécoupé hors ligne ultérieurement. Les termes « matelas ou panneau » incluent des matelas ou panneaux adaptés à être roulés pour leur commercialisation.

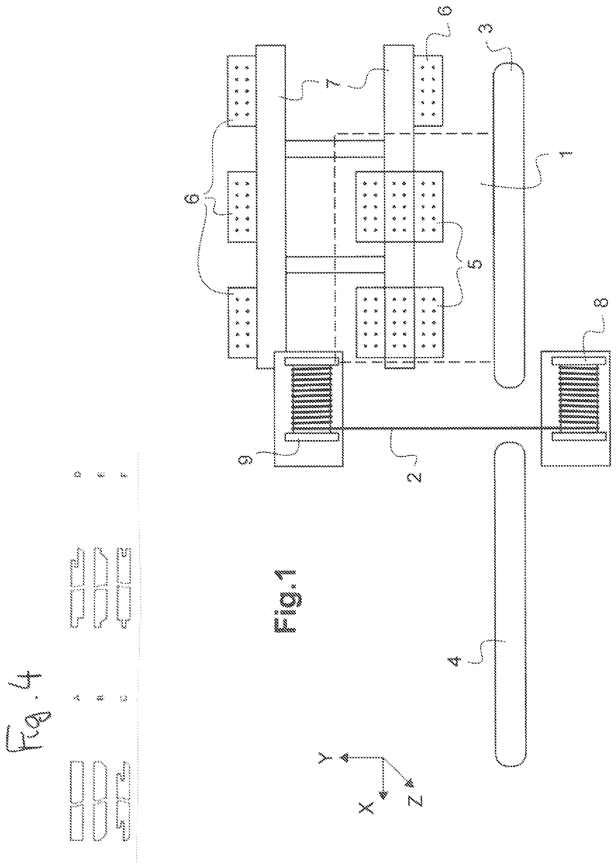

La figure 1 représente une vue de face du dispositif de découpe.

Le matelas ou panneau 1 en laine minérale, destiné à être découpé sur le dispositif selon l'invention, a par exemple une densité supérieure à 25 kg/m³, de préférence comprise entre 30 kg/m³ et 180 kg/m³ afin de faciliter la découpe. Le matelas ou panneau en laine minérale peut par exemple être revêtu d'un voile sur chacune de ses faces principales. Un tel voile peut procurer au matelas des propriétés mécaniques et acoustiques.

La plaque ou le panneau 1 de matériau de construction poreux, destiné à être découpé sur le dispositif selon l'invention, a par exemple une densité supérieure ou égale à 5 kg/m³, en particulier au moins 10 kg/m³, notamment au moins 20 à 25 kg/m³ et de préférence inférieure à 180 kg/m³.

Le dispositif de découpe comprend des moyens de déplacement d'un matelas, d'un panneau ou d'une plaque 1 en laine minérale ou matériau de construction poreux dans une direction X, ainsi qu'un fil 2 adapté à découper le matelas, le panneau ou la plaque, le fil pouvant être diamanté. Le dispositif de découpe comprend également des moyens 8, 9 de défilement du fil 2 dans une direction Y perpendiculaire à la direction X de déplacement du matelas ou panneau 1 en laine minérale. Ici, les moyens de défilement 8, 9 du fil sont des bobines. Alternativement, le fil peut défiler selon la direction Y par un mouvement de va-et-vient ou de réciprocation.

Selon les modes de réalisation, le fil 2 peut en outre être fixe par rapport à la direction Z ou apte à se déplacer selon cette direction Z, la direction Z étant perpendiculaire à la fois à la direction X de déplacement du matelas ou panneau 1 en laine minérale et à la direction Y de défilement du fil 2.

Les moyens de déplacement du matelas, du panneau ou de la plaque 1 en laine minérale ou matériau de construction poreux comprennent au moins un convoyeur 3, 4. Le convoyeur 3, 4 est un convoyeur à bande horizontal sur lequel repose le matelas, le panneau ou la plaque 1. Le convoyeur peut avancer ou reculer en fonction des besoins de la découpe. La direction de déplacement est l'axe X sur la figure 1. Le matelas, le panneau ou la plaque 1 peut reposer horizontalement, posé à plat, ou verticalement, posé sur sa tranche, sur le convoyeur 3, 4.

Le convoyeur 3, 4 est de préférence en deux parties lorsque le fil 2 est apte à se déplacer dans la direction Z. Ainsi, un espace est prévu entre les deux parties de convoyeur 3, 4 pour permettre le passage du fil 2 pour la découpe transversale du matelas, du panneau ou de la plaque 1, sans être gêné par le convoyeur.

Lorsque le matelas, le panneau ou la plaque 1 est sous forme de bande continue horizontale, le fil 2 peut permettre une découpe en ligne, par exemple en deux dans l'épaisseur. Le fil 2 est alors fixe et le matelas repose horizontalement sur le convoyeur.

Lorsque le matelas, le panneau ou la plaque 1 est sous forme de bande continue horizontale, le fil 2 peut aussi permettre une découpe transversale en ligne, par exemple pour former des matelas ou panneaux de forme sensiblement parallélépipédique. Le fil 2 est alors apte à se déplacer dans la direction Z.

Lorsque le matelas, le panneau ou la plaque 1 repose verticalement sur le convoyeur 3, 4 horizontal, le fil 2 peut être fixe par rapport à l'axe Z ou apte à se déplacer dans la direction Z.

Le dispositif de découpe peut donc comprendre des moyens de déplacement du fil 2 dans la direction Z, ces moyens de déplacement permettant un déplacement du fil 2 dans une direction Z perpendiculaire à la fois à la direction X de déplacement du matelas, du panneau ou de la plaque 1 en laine minérale ou matériau de construction poreux et à la direction Y de défilement du fil 2. Ainsi, le dispositif permet de réaliser des découpes selon deux directions perpendiculaires l'une à l'autre. De la sorte, plusieurs découpes différentes peuvent être réalisées en une seule passe. De plus, en combinant les deux mouvements de déplacement dans les directions X et Z, on peut réaliser des découpes de formes variées.

Par ailleurs, lorsque le matelas ou panneau 1 repose verticalement sur le convoyeur horizontal, le dispositif comprend des moyens de préhension 5, 6, 7 du matelas, du panneau ou de la plaque 1 afin de maintenir le matelas, le panneau ou la plaque en position. Dans ce cas-là, les moyens de préhension 5, 6, 7 du matelas, du panneau ou de la plaque 1 sont aptes à se déplacer simultanément et dans la même direction X que le convoyeur 3, 4 pour un mouvement uniforme du matelas, du panneau ou de la plaque 1.

Les moyens de préhension du matelas, du panneau ou de la plaque 1 en laine minérale ou matériau de construction comprennent un système de préhension sous vide 5, 6, 7. Le système de préhension sous vide 5, 6, 7 est constitué de préhenseurs 5, 6 sous vide fixés sur un support mobile 7 adapté à se déplacer en même temps que le ou les convoyeurs 3, 4 pendant la découpe du matelas, du panneau ou de la plaque 1. Les préhenseurs sous vide 5, 6 peuvent être sous forme de plaques percées d'une multitude d'orifices reliés à un moyen de dépressurisation ; le diamètre des orifices sont choisis en fonction de la force que l'on souhaite appliquer localement sur le matelas, le panneau ou la plaque 1. Les préhenseurs 5,6 peuvent avoir différentes tailles, comme représenté sur la figure 1. Le matelas, le panneau ou la plaque 1 doit être parfaitement tenu(e) par les préhenseurs sous vide 5, 6 pendant la découpe par le fil 2 pour permettre une découpe la plus précise possible. Les préhenseurs de taille plus importante 5 permettent un meilleur maintien des matelas, panneaux ou plaques de petite taille. Les préhenseurs sous vide 5, 6 doivent permettre de maintenir le matelas, , le panneau ou la plaque 1 sans le (la) contraindre, sans le (la) déformer. Ces préhenseurs sous vide reprennent les efforts exercés par le fil lors du déplacement du matelas, du panneau ou de la plaque 1 et/ou du fil 2 pour assurer une maîtrise parfaite du positionnement dynamique du matelas, du panneau ou de la plaque, et en évitant tout glissement du matelas, du panneau ou de la plaque par rapport au préhenseur. La synchronisation des différents mouvements est assurée par un système numérique de commande. Sur la figure 1, seuls les préhenseurs sous vide 5 maintiennent le matelas, le panneau ou la plaque 1 car dans cet exemple de réalisation le matelas, le panneau ou la plaque est de taille réduite. Les préhenseurs sous vide 6, périphériques, sont utilisés en complément des préhenseurs sous vide 5 pour des matelas, panneaux ou plaques 1 de taille plus grande.

Le fil 2 est de préférence un fil en acier de diamètre compris entre 300 µm et 2 mm, en particulier entre 400 µm et moins de 1 mm, notamment entre 400 µm et 700 µm, de préférence entre 420 µm et 550 µm pour améliorer la qualité de la découpe, voire entre 480 µm et 520 µm pour améliorer encore la qualité de la découpe. Le fil acier peut comporter à sa surface des particules abrasives, qui sont par exemple en diamant, en oxyde de zirconium ou en nitrure de bore. On parle alors de fil diamanté. La taille des particules abrasives est de préférence comprise entre 30 et 80 µm. L'espace entre les particules abrasives est de préférence compris entre 10 µm et 20 µm. La présence de particules abrasives permet de réaliser une découpe nette, qui permet de s'affranchir d'un ponçage ultérieur. Pour une découpe de laine minérale, le fil 2 est de préférence diamanté.

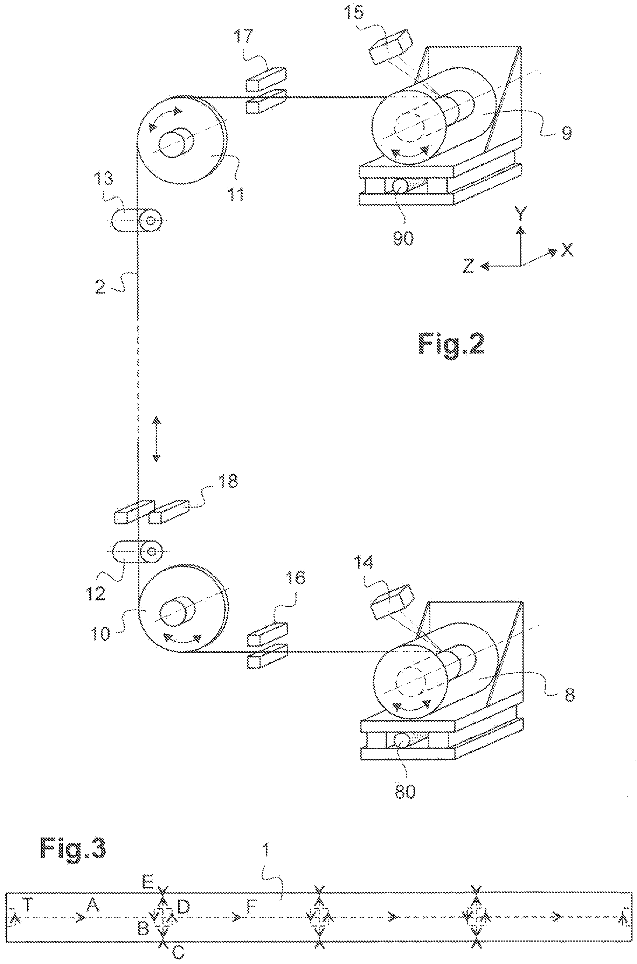

Selon un mode de réalisation, le fil 2 est fixé à chacune de ses extrémités à une bobine 8, 9. Le fil 2 est enroulé sur les deux bobines 8, 9, l'espace entre les deux bobines 8, 9 étant supérieur à au moins une dimension du matelas, du panneau ou de la plaque 1 à découper. Le fil 2 est de préférence vertical (selon l'axe Y), comme représenté sur les figures 1 et 2. Chacune des bobines inférieure 8 et supérieure 9 est entraînée en rotation par un moteur (non représenté). Les bobines 8, 9 sont asservies l'une à l'autre par un système d'asservissement pour permettre de conserver une tension de fil constante et pour maîtriser la vitesse de défilement du fil 2. Ce système d'asservissement est décrit plus en détail plus loin dans le texte. Le fil 2 a une longueur par exemple comprise entre 5 et 15 km. Il se déroule d'une bobine pour s'enrouler sur l'autre bobine. Lorsqu'une bobine 8, 9 est vide et que l'autre est pleine, le sens de défilement du fil 2 s'inverse pour que le fil s'enroule sur la bobine vide et se déroule de la bobine pleine.

La figure 2 représente une vue de côté en détail du dispositif de découpe.

Le fil 2 est guidé, à la sortie de chacune des bobines 8, 9, par une poulie de guidage 10, 11 respectivement, qui assure le positionnement du fil 2 par rapport au matelas, au panneau ou à la plaque 1 à découper. A la sortie de chacune des poulies de guidage 10, 11, le fil est encore guidé par un galet 12, 13 respectivement, qui permet de positionner encore plus précisément le fil. Ainsi, lorsque le fil 2 est en position verticale (selon l'axe Y), comme sur les figures 1 et 2, le fil 2 passe par exemple par la bobine inférieure 8 puis par la poulie de guidage 10 inférieure puis par le galet 12 inférieur puis par le galet 13 supérieur puis par la poulie de guidage 11 supérieure puis par la bobine 9 supérieure. Lors de la découpe par le fil 2, le matelas, le panneau ou la plaque 1 passe entre les deux galets 12, 13.

La vitesse linéaire de défilement du fil 2 est comprise entre 10 m/s et 20 m/s, de préférence entre 14 m/s et 16 m/s, voire est égale à 15 m/s, pour améliorer encore la qualité de la découpe. Le fil 2 défile à sec, sans passage dans un liquide de refroidissement.

La tension du fil 2 est comprise entre 150 N et 500 N, de préférence entre 250 N et 350 N pour améliorer encore la qualité de la découpe en réduisant la flexion du fil. La tension du fil dépend du diamètre du fil. Plus le fil est tendu, plus sa flexion est réduite. Le fil 2 pouvant être soumis à des contraintes très importantes, il est de préférence en acier à très haute limite d'élasticité pouvant résister à des contraintes pouvant atteindre 1000 MPa, voire 2000 MPa.

Le diamètre, la vitesse linéaire et la tension du fil 2 sont trois paramètres très importants pour une découpe nette du matelas. Aussi, le dispositif de découpe comprend plusieurs capteurs reliés au système d'asservissement, qui permettent au système d'asservissement d'adapter en temps réel (toutes les 5 ms) la vitesse de rotation des bobines 8, 9 pour maintenir une vitesse linéaire et une tension constantes pendant la découpe.

Ainsi, le dispositif de découpe comprend, en face de chaque bobine 8, 9 un capteur optique, 14, 15 respectivement, qui mesure le diamètre de la bobine (ou plus précisément le diamètre extérieur de l'enroulement de fil sur la bobine) : comme expliqué plus haut, le diamètre de la bobine varie au cours de la découpe à mesure que le fil se déroule d'une bobine pour s'enrouler sur l'autre bobine. Cette variation de diamètre est prise en compte en temps réel pour ajuster la vitesse d'enroulement/déroulement des bobines 8, 9 et garantir la vitesse linéaire souhaitée. Les données de ces capteurs optiques 14, 15 permettent également l'évaluation de la longueur de fil restante sur chacune des bobines.

Le dispositif de découpe comprend également deux capteurs de mesure de positionnement 16, 17 positionnés respectivement entre la bobine 8 inférieure et la poulie de guidage 10 inférieure, et entre la bobine 9 supérieure et la poulie de guidage 11 supérieure. Ces capteurs 16 et 17 mesurent la position du fil 2 selon l'axe X. Chacune des bobines 8, 9 est montée sur une vis sans fin, 80, 90 respectivement, d'axe parallèle à la direction X, pour permettre un alignement en temps réel entre la position du fil diamanté 2 s'enroulant/se déroulant des bobines 8, 9 et la position des poulies de guidage 10, 11, selon l'axe X. Les capteurs 16, 17 permettent de régler cette fonction de troncannage.

Le dispositif de découpe comprend également un capteur de mesure de flexion 18 positionné entre les galets 12, 13. Ce capteur de mesure de flexion 18 permet de mesurer la déformation du fil selon l'axe X, imposée par la poussée opérée par le produit dans son déplacement relatif par rapport au fil. Les données de ce capteur de mesure de flexion 18, couplées aux données des capteurs optiques 14, 15, permettent d'ajuster en temps réel la tension du fil en ajustant la vitesse d'enroulement/déroulement des bobines 8, 9. Ce capteur de flexion 18 permet ainsi de régler la rectitude du fil.

Les capteurs de mesure de positionnement et de flexion 16 à 18 sont par exemple des barrettes numériques munies d'une pluralité de faisceaux laser qui détectent la trace du fil.

Grâce à ces capteurs 14 à 18, qui sont des moyens de contrôle très précis de la tension du fil, on peut ainsi minimiser l'amplitude de vibration du fil, de sorte que plus aucune onde n'est perceptible par un examen visuel de la face coupée, ce qui procure une esthétique quasi parfaite. La tension du fil, ajustée pour éviter les vibrations, fait que le fil se comporte plus comme un coin qui propage une fissure dans le matériau que comme un couteau qui coupe les fibres en deux.

Enfin, l'ensemble formé par le fil 2, les bobines 8, 9, les poulies de guidage 10, 11, les galets 12, 13 et les capteurs 14 à 18 est monté sur un châssis ou un montant (non représenté), lui-même associé à des moyens de déplacement (non représentés). Ces moyens de déplacement permettent un déplacement du fil 2 dans la direction Z de la figure 1, soit selon un axe perpendiculaire à la fois à la direction de déplacement du matelas, du panneau ou de la plaque 1 en laine minérale ou en matériau de construction poreux, qui est selon l'axe X, et à la direction Y de défilement du fil 2. Les deux mouvements de déplacement selon les axes X et Z peuvent être combinés pour réaliser des découpes de forme complexe. La vitesse de déplacement du fil 2 selon l'axe Z est comprise entre 10 mm/s et 250 mm/s afin de permettre une précision du motif géométrique des bords.

Le dispositif de découpe permet de découper un matelas, un panneau ou une plaque 1 en laine minérale ou matériau de construction :
- dans sa largeur ou sa longueur afin d'obtenir un matelas, un panneau ou une plaque de plus petite dimension,
- dans son épaisseur afin d'obtenir au moins deux matelas, panneaux ou plaques d'épaisseur inférieure à celle du matelas ou panneau de départ, et/ou
- sur ses bords afin de réaliser une feuillure ou toute autre forme de détail de bord.

Pendant la découpe, la vitesse de déplacement du matelas, du panneau ou de la plaque 1 en laine minérale ou matériau de construction est comprise entre 500 mm/s et 2 m/s pour la découpe dans l'épaisseur de type refente, et entre 10 mm/s et 250 mm/s pour la découpe sur les bords afin de permettre une précision du motif géométrique des bords. Le matelas, le panneau ou la plaque 1 en laine minérale ou matériau de construction se déplace par mise en mouvement conjointe des convoyeurs 3, 4 et du système de préhension sous vide 5, 6, 7.

Les feuillures ou découpes de bord peuvent avoir toutes formes imaginables, avec des géométries aussi variées que carrées, rectangles, triangles, polygonales, arrondies, curvilignes, sinusoïdales, etc... La figure 4 représente différents types de bords de matelas, panneau ou plaque. Ces exemples de bords sont issus de la norme EN 13964 :2014 (F).

Les mouvements de déplacement du matelas, du panneau ou de la plaque, les mouvements de déplacement du fil, les vitesses d'enroulement/de déroulement des bobines, les mouvements des vis sans fin et l'actionnement des préhenseurs sous vide sont motorisés et commandés par un système général de commande du dispositif.

Le dispositif de découpe permet de réaliser par exemple des panneaux acoustiques en laine minérale pour plafond. Les feuillures de tels panneaux acoustiques, réalisées sur chacun de ses bords, sont destinées à reposer sur une ossature métallique fixée au plafond. De tels panneaux sont généralement de forme carrée, mais peuvent aussi être rectangulaires. Lorsque le matelas est découpé en deux dans l'épaisseur à partir d'un matelas revêtu d'un voile sur ses deux faces principales, le panneau résultant a un voile sur une seule de ses faces principales. Un voile peut alors être collé sur l'autre face principale du panneau issue de la découpe.

Le dispositif de découpe permet par exemple de découper un matelas, un panneau ou une plaque à la fois dans son épaisseur, transversalement dans sa largeur, et sur ses bords pour réaliser des feuillures ou tout autre détail de bord, comme montré sur la figure 3 ou la figure 4 par exemple.

La figure 3 représente une vue en coupe d'un exemple de découpe dans un matelas, un panneau ou une plaque 1, réalisée avec le dispositif, suivant un chemin défini par la succession de tronçons repérés par les lettres capitales.

Ainsi, le matelas, le panneau ou la plaque 1 peut être découpé(e) sur un de ses bords pour réaliser une feuillure (repère T), puis en deux dans son épaisseur (repère A), puis transversalement dans sa largeur avec simultanément découpe de feuillures (repères B, C, D, E), puis à nouveau découpe en deux dans l'épaisseur (repère F), et ainsi de suite de façon à former plusieurs matelas ou panneaux avec des feuillures découpées sur deux bords opposés. Chaque matelas, panneau ou plaque obtenu(e) est alors tourné de 90° pour réaliser une découpe transversale dans le sens de la longueur initiale avec simultanément découpe des feuillures sur les deux bords restants. La rotation de 90° peut être effectuée au moyen d'un système de préhenseurs sous vide analogue aux préhenseurs 5, 6, disposés en vis-à-vis des préhenseurs 5, 6. En variante, les matelas, panneaux ou plaques découpé(e)s peuvent être convoyé(e)s vers une autre station de découpe équipée d'un autre fil agencé pour réaliser la découpe de feuillure sur les bords restants.

Il est aussi possible de réaliser d'abord la découpe du matelas, du panneau ou de la plaque à la bonne taille puis de réaliser la découpe des feuillures.

On obtient alors un ou plusieurs matelas, panneaux ou plaques, par exemple carré(e)s ou rectangulaires, avec des feuillures sur chacun de leurs bords et, de façon optionnelle, un voile sur une de leurs faces principales (si le matelas, le panneau ou la plaque initial(e) est coupé(e) en deux dans l'épaisseur et qu'il (elle) comportait un voile sur chacune de ses faces principales). Chaque matelas, panneau ou plaque de ce type peut être ultérieurement muni d'un voile décor sur son autre face principale.

Un procédé de découpe de matelas en laine minérale comprend les étapes suivantes :
- fourniture d'un matelas ou panneau 1 en laine minérale,
- déplacement du matelas ou panneau 1 en laine minérale dans une direction X par des moyens de déplacement 3, 4 du matelas ou panneau 1 en laine minérale, qui comprennent au moins un convoyeur,
- découpe du matelas en laine minérale par un fil diamanté 2 apte à défiler selon une direction Y perpendiculaire à la direction X de déplacement du matelas ou panneau 1 en laine minérale.

Pendant la découpe, le matelas ou panneau 1 en laine minérale se déplace grâce au convoyeur 3, 4. Il peut être tenu grâce au système de préhension sous vide 5, 6, 7. Le fil diamanté 2 peut être apte à se déplacer dans une direction Z perpendiculaire à la fois à la direction X de déplacement du matelas ou panneau 1 en laine minérale et à la direction Y de défilement du fil diamanté.

En variante, le procédé de découpe de plaque ou panneau en matériau de construction poreux comprend les étapes suivantes :
- fourniture d'une plaque ou d'un panneau 1 de matériau de construction poreux,
- déplacement de la plaque ou du panneau 1 dans une direction X par des moyens de déplacement 3, 4 qui comprennent au moins un convoyeur,
- découpe de la plaque ou du panneau par un fil 2 apte à défiler selon une direction Y perpendiculaire à la direction X de déplacement de la plaque ou du panneau 1.

Pendant la découpe, la plaque ou le panneau 1 se déplace grâce au convoyeur 3, 4. Il peut être tenu grâce au système de préhension sous vide 5, 6, 7. Le fil 2 peut être apte à se déplacer dans une direction perpendiculaire à la fois à la direction X de déplacement de la plaque ou panneau 1 et à la direction Y de défilement du fil.

Le procédé de découpe peut être réalisé en ligne, à la fin de la ligne de production de la plaque ou du panneau 1. Dans ce cas, la vitesse de déplacement de la plaque ou du panneau 1 est d'au moins 1 ou 2 m/min, de préférence d'au moins 15 m/min, voire d'au moins 30 m/min, la découpe pouvant être réalisée dans l'épaisseur ou sur les bords.

Le matelas ou panneau, par exemple en laine minérale, découpé selon le procédé selon l'invention, comprend sur au moins une de ses faces principales ou un de ses bords, une découpe d'excellente qualité, lisse à quelques dixièmes de millimètres près. On entend par là que la surface issue de la découpe présente un écart entre le point le plus en saillie de cette surface et le point le plus en retrait de cette surface, d'au plus quelques dixièmes de millimètres, notamment 2 dixièmes de millimètre. Cette caractéristique est obtenue par l'aspect diamanté du fil.

Le procédé selon l'invention garantit également l'atteinte d'une grande précision dimensionnelle pour le panneau dont deux bords opposés parallèles entre eux ne présentent pas d'écart de parallélisme supérieur à 2 dixièmes de millimètre.

## Revendications

1. Procédé de découpe d'un matelas, d'un panneau ou d'une plaque (1) de départ en laine minérale ou matériau de construction poreux en plusieurs matelas, panneaux ou plaques, comprenant les étapes suivantes :
- fourniture d'un matelas, d'un panneau ou d'une plaque (1) de départ en laine minérale ou matériau de construction poreux, le matelas, le panneau ou la plaque de départ ayant un bord avant,
- découpe du matelas, du panneau ou de la plaque (1) de départ en deux dans son épaisseur (A) au moyen d'un fil (2), par déplacement du matelas, du panneau ou de la plaque (1) dans une direction (X) par des moyens de déplacement (3, 4) du matelas, du panneau ou de la plaque (1), qui comprennent au moins un convoyeur, le fil (2) étant apte à défiler selon une direction (Y) perpendiculaire à la direction (X) de déplacement du matelas, du panneau ou de la plaque (1), de façon à former deux premiers (premières) matelas, panneaux ou plaques,
- découpe du bord arrière des deux premiers (premières) matelas, panneaux ou plaques et du bord avant de deux deuxièmes matelas, panneaux ou plaques (C, E) par déplacement du fil selon au moins une direction (Z) perpendiculaire à la fois à la direction (X) de déplacement du matelas, du panneau ou de la plaque plaque (1) et à la direction (Y) de défilement du fil (2),
- découpe du matelas, du panneau ou de la plaque (1) en deux dans son épaisseur (F) au moyen du fil (2), par déplacement du matelas, du panneau ou de la plaque (1) dans la direction (X) de déplacement du matelas, du panneau ou de la plaque (1), de façon à former les deux deuxièmes matelas, panneaux ou plaques,
- réitération des étapes de découpe de bords avant/arrière et de découpe dans l'épaisseur pour former deux troisièmes, quatrièmes, etc... matelas, panneaux ou plaques.

2. Procédé de découpe selon la revendication 1, comprenant en outre une étape de découpe d'une feuillure (T) dans le bord avant du matelas, du panneau ou de la plaque (1) de départ, d'une feuillure (B) dans le bord arrière des deux premiers (premières) matelas, panneaux ou plaques, d'une feuillure (D) dans le bord avant des deux deuxièmes matelas, panneaux ou plaques et ainsi de suite de façon à former des feuillures dans le bord arrière et avant des deux respectivement deuxièmes et troisièmes matelas, panneaux ou plaques, des deux troisièmes et quatrièmes matelas, panneaux ou plaques, etc..., par déplacement du fil (2) selon la direction (Z) et du matelas, du panneau ou de la plaque selon la direction (X), de façon à réaliser une découpe selon deux directions perpendiculaires l'une à l'autre, ces deux déplacement pouvant être simultanés.

3. Procédé de découpe selon la revendication 2, comprenant en outre une étape de rotation de 90° de chaque premier (première), deuxième, etc... matelas, panneau ou plaque puis une étape de découpe transversale de chaque premier (première), deuxième, etc... matelas, panneau ou plaque dans le sens de la longueur initiale pour découper des feuillures sur les deux bords restants.

4. Procédé de découpe selon l'une des revendications 1 à 3, dans lequel la découpe est réalisée par un fil (2) ayant un diamètre compris entre 400 µm et 700 µm, voire entre 300 µm et 700 µm, voire entre 300 µm et moins de 1 mm, voire entre 300 µm et 2 mm.

5. Procédé de découpe selon la revendication 4, dans lequel le fil est diamanté et comporte des particules abrasives, notamment d'oxyde de zirconium, a sa surface, de taille préférentiellement comprise entre 30 et 80 µm.

6. Procédé de découpe selon l'une des revendications 1 à 5, dans lequel le fil (2) défile à une vitesse linéaire comprise entre 10 m/s et 20 m/s.

7. Procédé de découpe selon l'une des revendications 1 à 6, dans lequel la tension du fil est réglée à une valeur comprise entre 150 N et 500 N.

8. Procédé de découpe selon l'une des revendications 1 à 7, dans lequel le matelas, le panneau ou la plaque (1) se déplace à une vitesse comprise entre 500 mm/s et 2 m/s pour une découpe dans l'épaisseur et entre 10 mm/s et 250 mm/s pour une découpe sur les bords.

9. Procédé de découpe selon l'une des revendications 1 à 8, comprenant en outre une étape de préhension du matelas, du panneau ou de la plaque (1) par des moyens de préhension (5, 6, 7), les moyens de préhensions comprenant un système de préhension sous vide adapté à se déplacer simultanément et dans la même direction (X) que les moyens de déplacement (3, 4) du matelas, du panneau ou de la plaque (1).

## Patentansprüche

1. Verfahren zum Schneiden einer Ausgangsmatratze, eines -paneels oder einer - platte (1) aus Mineralwolle oder porösem Baumaterial in mehrere Matratzen, Paneele oder Platten, umfassend die folgenden Schritte:
- Bereitstellen einer Ausgangsmatratze, eines -paneels oder einer -platte (1) aus Mineralwolle oder porösem Baumaterial, wobei die Ausgangsmatratze, das -paneel oder die -platte eine Vorderkante aufweist,
- Schneiden der Ausgangsmatratze, des -paneels oder der -platte (1) in ihrer Dicke (A) mittels eines Drahtes (2) in zwei Hälften durch Verlagern der Matratze, des Paneels oder der Platte (1) durch Verlagerungseinrichtungen (3, 4) der Matratze, des Paneels oder der Platte (1), die mindestens einen Förderer umfassen, in einer Richtung (X), wobei der Draht (2) imstande ist, sich in einer Richtung (Y) senkrecht zu der Verlagerungsrichtung (X) der Matratze, des Paneels oder der Platte (1) zu bewegen, sodass zwei erste Matratzen, Paneele oder Platten gebildet werden,
- Schneiden der Hinterkante der zwei ersten Matratzen, Paneele oder Platten und der Vorderkante von zwei zweiten Matratzen, Paneelen oder Platten (C, E) durch Verlagern des Drahtes in mindestens einer senkrechten Richtung (Z) gleichzeitig zu der Verlagerungsrichtung (X) der Matratze, des Paneels oder der Plattenplatte (1) und zur Bewegungsrichtung (Y) des Drahtes (2),
- Schneiden der Matratze, des Paneels oder der Platte (1) in ihrer Dicke (F) mittels des Drahtes (2) durch Verlagern der Matratze, des Paneels oder der Platte (1) in Verlagerungsrichtung (X) der Matratze, des Paneels oder der Platte (1) in zwei Hälften, sodass die zwei zweiten Matratzen, Paneele oder Platten gebildet werden,
- Wiederholen der Schritte des Schneidens der Vorder-/Hinterkanten und des Schneidens in der Dicke, um zwei dritte, vierte usw. Matratzen, Paneele oder Platten zu bilden.

2. Schneidverfahren nach Anspruch 1, ferner umfassend einen Schritt des Schneidens einer Nut (T) in der Vorderkante der Ausgangsmatratze, des -paneels oder der -platte (1), einer Nut (B) in der Hinterkante der zwei ersten Matratzen, Paneele oder Platten, einer Nut (D) in der Vorderkante der zwei zweiten Matratzen, Paneele oder Platten usw., sodass Nuten in der Hinter- und Vorderkante der zwei jeweils zweiten bzw. dritten Matratzen, Paneele oder Platten, der zwei dritten bzw. vierten Matratzen, Paneele oder Platten usw. durch Verlagern des Drahtes (2) in Richtung (Z) und der Matratze, des Paneels oder der Platte in Richtung (X) derart gebildet werden, dass ein Schnitt in zwei zueinander senkrechten Richtungen erfolgt, wobei diese zwei Verlagerungen gleichzeitig erfolgen können.

3. Schneidverfahren nach Anspruch 2, ferner umfassend einen Schritt der 90°-Drehung jeder/jedes ersten, zweiten usw. Matratze, Paneels oder Platte, dann einen Schritt des Querschneidens jeder/jedes ersten, zweiten, usw. Matratze, Paneels oder Platte in Richtung der ursprünglichen Länge, um Nuten auf den zwei verbleibenden Kanten zu schneiden.

4. Schneidverfahren nach einem der Ansprüche 1 bis 3, wobei das Schneiden durch einen Draht (2) mit einem Durchmesser zwischen 400 µm und 700 µm, sogar zwischen 300 µm und 700 µm, sogar zwischen 300 µm und weniger als 1 mm, sogar zwischen 300 µm und 2 mm durchgeführt wird.

5. Schneidverfahren nach Anspruch 4, wobei der Draht diamantbeschichtet ist und auf seiner Oberfläche Schleifpartikel, insbesondere aus Zirkoniumoxid, mit einer Größe vorzugsweise zwischen 30 und 80 µm aufweist.

6. Schneidverfahren nach einem der Ansprüche 1 bis 5, wobei sich der Draht (2) mit einer linearen Geschwindigkeit zwischen 10 m/s und 20 m/s bewegt.

7. Schneidverfahren nach einem der Ansprüche 1 bis 6, wobei die Drahtspannung auf einen Wert zwischen 150 N und 500 N eingestellt wird.

8. Schneidverfahren nach einem der Ansprüche 1 bis 7, wobei sich die Matratze, das Paneel oder die Platte (1) mit einer Geschwindigkeit zwischen 500 mm/s und 2 m/s zum Schneiden in der Dicke und zwischen 10 mm/s und 250 mm/s zum Schneiden an den Kanten verlagert.

9. Schneidverfahren nach einem der Ansprüche 1 bis 8, ferner umfassend einen Schritt des Ergreifens der Matratze, des Paneels oder der Platte (1) durch Greifeinrichtungen (5, 6, 7), wobei die Greifeinrichtungen ein Vakuum-Greifsystem umfassen, das eingerichtet ist, um sich gleichzeitig und in der gleichen Richtung (X) wie die Verlagerungseinrichtungen (3, 4) der Matratze, des Paneels oder der Platte (1) zu verlagern.

## Claims

1. A method for cutting a starting mat, panel or plate (1) of mineral wool or porous construction material into several mats, panels or plates, comprising the following steps:
- supplying a starting mat, panel or plate (1) of mineral wool or porous construction material, the starting mat, panel or plate having a front edge,
- cutting the starting mat, panel or plate (1) into two in its thickness (A) by means of a wire (2), by moving the mat, panel or plate (1) in a direction (X) using movement means (3, 4) that move the mat, panel or plate (1) and comprise at least one conveyor, the wire (2) being able to pass in a direction (Y) perpendicular to the direction (X) of travel of the mat, panel or plate (1), so as to form two first mats, panels or plates,
- cutting the rear edge of the two first mats, panels or plates and the front edge of two second mats, panels or plates (C, E) by moving the wire in at least a direction (Z) perpendicular both to the direction (X) of travel of the mat, panel or plate plate (1) and to the direction (Y) in which the wire (2) passes,
- cutting the mat, panel or plate (1) into two in its thickness (F) using the wire (2), by moving the mat, panel or plate (1) in the direction (X) of travel of the mat, panel or plate (1) so as to form the two second mats, panels or plates,
- repeating the steps of cutting front/rear edges and of cutting in the thickness in order to form two third, fourth, etc. mats, panels or plates.

2. The method of cutting as claimed in claim 1, further comprising a step of cutting a rabbet (T) in the front edge of the starting mat, panel or plate (1), a rabbet (B) in the rear edge of the two first mats, panels or plates, a rabbet (D) in the front edge of the two second mats, panels or plates, and so on so as to form rabbets in the rear and front edge of, respectively, the two second and third mats, panels or plates, the two third and fourth mats, panels or plates, etc., by moving the wire (2) in the direction (Z) and the mat, panel or plate in the direction (X) so as to make a cut in two mutually perpendicular directions, it being possible for these two movements to be simultaneous.

3. The method of cutting as claimed in claim 2, further comprising a step of rotating each first, second, etc. mat, panel or plate through 90°, then a step of cutting each first, second, etc. mat, panel or plate transversely in the direction of the initial length so as to cut rabbets on the two remaining edges.

4. The method of cutting as claimed in one of claims 1 to 3, in which the cutting is performed by a wire (2) having a diameter of between 400 µm and 700 µm, or even between 300 µm and 700 µm, or even between 300 µm and under 1 mm, or even between 300 µm and 2 mm.

5. The method of cutting as claimed in claim 4, in which the wire is diamond-gritted and comprises abrasive particles, in particular of zirconium oxide, at its surface, of a size preferably comprised between 30 and 80 µm.

6. The method of cutting as claimed in one of claims 1 to 5, in which the wire (2) passes at a linear speed of between 10 m/s and 20 m/s.

7. The method of cutting as claimed in one of claims 1 to 6, in which the tension in the wire is set to a value of between 150 N and 500 N.

8. The method of cutting as claimed in one of claims 1 to 7, in which the mat, panel or plate (1) moves at a speed of between 500 mm/s and 2 m/s for cutting in the thickness, and between 10 mm/s and 250 mm/s for cutting on the edges.

9. The method of cutting as claimed in one of claims 1 to 8, further comprising a step in which holding means (5, 6, 7) take hold of the mat, panel or plate (1), the holding means comprising a vacuum holding system designed to move simultaneously with and in the same direction (X) as the movement means (3, 4) that move the mat, panel or plate (1).
